# EUROPÄISCHE PATENTSCHRIFT

(11) **EP 0 868 627 B1**
(45) Veröffentlichungstag und Bekanntmachung des Hinweises auf die Patenterteilung: **20.03.2002**
(21) Anmeldenummer: 96944076.7
(22) Anmeldetag: 30.12.1996
(51) Int. Cl.: F16L 37/20, F16L 37/12

(54) **SPANNVORRICHTUNG, INSBESONDERE FÜR EINE STECKKUPPLUNG**
CLAMPING DEVICE, IN PARTICULAR FOR A MALE COUPLING
DISPOSITIF DE SERRAGE, NOTAMMENT POUR ACCOUPLEMENT PAR EMBOITEMENT

(30) Priorität: 31.12.1995 DE 29520595 U
(43) Veröffentlichungstag der Anmeldung: 07.10.1998
(73) Patentinhaber: Weh GmbH, Verbindungstechnik, D-89257 Illertissen (DE)
(72) Erfinder: WEH, Wolfgang, D-89257 Illertissen (DE); WEH, Erwin, D-89257 Illertissen (DE)
(74) Vertreter: Fiener, Josef
(86) Internationale Anmeldenummer: EP9605865
(87) Internationale Veröffentlichungsnummer: WO9724547

(56) Entgegenhaltungen:
- EP-A- 0 202 592
- DE-A- 3 518 019
- DE-A- 3 639 528
- FR-A- 1 378 578
- GB-A- 1 452 068

## Beschreibung

Die Erfindung betrifft eine Spannvorrichtung, insbesondere für eine Steckkupplung, mit einem im wesentlichen zylinderförmigen Gehäuse, einem darin axial verschiebbar gelagerten Spannelement und einem an der Rückseite des Gehäuses angeordneten Betätigungsteil, das mit dem Spannkolben zur Axialverschiebung gekoppelt und von einer Druckfeder beaufschlagt ist, sowie mittels eines Handhebels betätigbar ist.

Eine derartige Spannvorrichtung für eine Steckkupplung ist aus der DE 35 18 019 C2 bekannt, wobei diese Steckkupplung insbesondere als sogenannter Prüfanschluß zum druckdichten Anschluß an Hydraulikleitungen, Gasflaschen und ähnliche Fluidleitungen ausgebildet ist. Die Betätigung beim Anschluß an das fluidführende Gegenstück, beispielsweise einen Anschlußnippel, Rohrstutzen und dgl. erfolgt hierbei durch einen Handhebel, der sich im wesentlichen axial zu dem zylinderförmigen Gehäuse erstreckt. Durch diesen Handhebel, der bevorzugt der menschlichen Hand angepaßt ist, kann somit eine Einhandbedienung zum Ankuppeln bzw. Abkuppeln der Steckkupplung mit gleichzeitiger Aktivierung der Spannvorrichtung erfolgen. Der am rückwärtigen Ende des Kupplungsgehäuses schwenkbar angelenkte Handhebel drückt dabei über einen Stift gegen das hintere Ende eines als Spannelement dienenden Spannkolbens, der an seinem vorderen Ende radial spreizbare Spannzangen oder Spannbacken aufweist, die in Kupplungsstellung die entsprechende Profilierung des Anschlusses (z. B. Anschlußnippel) hintergreifen. Dieser Spannkolben ist weiterhin von einer Druckfeder beaufschlagt, die bei Loslassen des Handhebels die Spannzangen gespreizt hält, so daß hierdurch die Steckkupplung in ihrer Eingriffslage vorgespannt und fixiert ist.

Die Federkraft dieser Druckfeder sollte dabei möglichst hoch sein, um die Spannelemente bzw. Spannzangen mit möglichst hoher Kraft in der Eingriffslage der Steckkupplung zu fixieren. Dies bringt jedoch eine relativ hohe Betätigungskraft über den Betätigungsweg (Axialhub) von einigen Zentimetern mit sich, so daß meist ein Kompromiß zwischen Vorspann-Federkraft und der am Handhebel aufzubringenden Betätigungskraft getroffen wird. Insbesondere verbietet sich meist eine Erhöhung der Federkraft der Druckfeder, da die in dieser Druckschrift gezeigte Beaufschlagung der Druckfeder durch einen seitlich angreifenden Stift zu Verkantungen der Druckfeder führen kann. Zudem sind die Hebelverhältnisse bei dieser Steckkupplung durch die seitiche Anordnung eingeschränkt, so daß auch die maximale Betätigungskraft begrenzt ist.

Weiterhin ist aus der WO 89/07729 eine Betätigung der grundsätzlich gleich aufgebauten Steckkupplung durch eine rückseitigen, etwa handtellergroßen Druckknopf bekannt, mit dem eine Druckfeder zum Anschließen bzw. Lösen der Steckkupplung betätigt werden kann. Hierbei sind die aufbringbaren Bedienkräfte jedoch gering. Weiterhin ist aus der WO 89/11059 eine ebenfalls ähnlich aufgebaute Steckkupplung bekannt, wobei die Betätigung des als Spannelement dienenden Spannkolbens über einen Exzenter erfolgt. Obwohl hierbei die Hebelverhältnisse günstiger sind, ist die Herstellung dieser Exzenterwelle jedoch sehr aufwendig. Zudem ist bei all diesen Spannvorrichtungen nachteilig, daß die Vorspannkraft in Spannstellung (verriegelte Spannzangen) aufgrund des relativ großen, zur Betätigung erforderlichen Axialhubes absinkt, andererseits bei Betätigung der Spannvorrichtung die zu überwindende Federkraft am höchsten ist, da die Druckfeder nahezu vollständig oder gar auf Block zusammengedrückt werden muß.

Demzufolge liegt der Erfindung die Aufgabe zugrunde, eine gattungsgemäße Spannvorrichtung hinsichtlich der auf das Spannelement wirkenden axialen Spannkraft bei geringer Bedienkraft und geringem Herstellungsaufwand zu verbessern.

Diese Aufgabe wird gelöst durch eine Spannvorrichtung gemäß den Merkmalen des Anspruches 1.

Durch die Ausbildung des Betätigungsteils mit einem zentral angeordneten Zugbolzen kann eine relativ starke Druckfeder Verwendung finden, die das Spannelement, in der bevorzugten Anwendung bei einer Steckkupplung nämlich den Spannkolben und damit die Spannzangen, mit hoher Spannkraft beaufschlagen und in ihrer Eingriffslage fixieren kann. Durch die zentrale Anordnung des Zugbolzens ist dabei die Beaufschlagung der Druckfeder äußerst gleichmäßig, so daß keine Verkantungen auftreten. Durch den radial verbreiteten Anschlagflansch an dem gehäuseinneren Ende des Zugbolzens ergibt sich eine einfache Herstellung, wobei in bevorzugter Weise der Anschlagflansch für die Druckfeder zugleich zur exakten Führung des Zugbolzens innerhalb einer Hülse dienen kann. Auch hierdurch ergibt sich eine Verringerung der Bedienkraft, insbesondere eine Vermeidung von Verkantungen, so daß "Losbrechkräfte" vermieden werden. Durch die schwenkbare Lagerung des Handhebels nicht mehr am Gehäuse, sondern an dem gehäuseäußeren Ende des Zugbolzens ergibt sich eine besonders einfach herstellbare Lagerung. Dabei kann die Hebellänge des Handhebels beliebig groß gewählt werden, so daß hierdurch besonders hohe Kräfte gegen die Druckfeder aufgebracht werden können.

Wesentlich ist hierbei insbesondere, daß im Gegensatz zum Stand der Technik der Federweg der Druckfeder trotz relativ großem Axialhub des Spannelementes in Spannstellung sehr gering ist, so daß die Federkraft in Spannstellung nicht absinkt, sondern maximal ist bzw. konstant hoch bleibt. Die Betätigungskraft bei Entlastung der Spannvorrichtung (z.B. beim Anschließen der Steckkupplung) ist andererseits dabei minimal, da gegenüber den bekannten Steckkupplungen die Druckfeder bei der Axialverschiebung des Spannelementes nicht mehr oder kaum zusammengedrückt werden braucht.

In bevorzugter Weise ist dabei der Handhebel als Übertotpunkt-Verriegelungsvorrichtung ausgebildet, insbesondere durch zwei in einem Winkel von etwa 80° aufeinander zulaufende Anschlagflächen im Bereich der Schwenklagerung, so daß hierdurch eine sichere Fixierung des Handhebels in beiden Endlagen erreicht wird. Zudem kann hierbei der Handhebel so ausgebildet sein, daß neben den beiden Extremlagen auch noch eine entgegensetzte Position eingenommen werden kann, so daß je nach Anwendungsfall der Handhebel nach oben oder nach unten (bzw. nach rechts oder nach links) geschwenkt werden kann. Zudem ist die Anordnung des zentralen Zugbolzens rotationssymmetrisch, so daß der Handhebel in eine beliebige Verdrehlage bezüglich der Mittelachse der Spannvorrichtung gebracht werden kann, was insbesondere bei beengten Montageverhältnissen vorteilhaft sein kann.

Weitere vorteilhafte Ausgestaltungen sind Gegenstand der Unteransprüche.

Nachfolgend werden zwei bevorzugte Ausführungsformen der Spannvorrichtung am Anwendungsbeispiel einer Steckkupplung anhand der Zeichnungen näher erläutert und beschrieben. Hierin zeigen:
- Fig. 1: eine erste Ausführungsform einer Spannvorrichtung bei einer Steckkupplung in Seitenansicht mit Halbschnitt entlang der Mittelachse; und
- Fig. 2: eine zweite Ausführungsform der Spannvorrichtung bei einer Steckkupplung in Seitenansicht mit Halbschnitt entlang der Mittelachse.

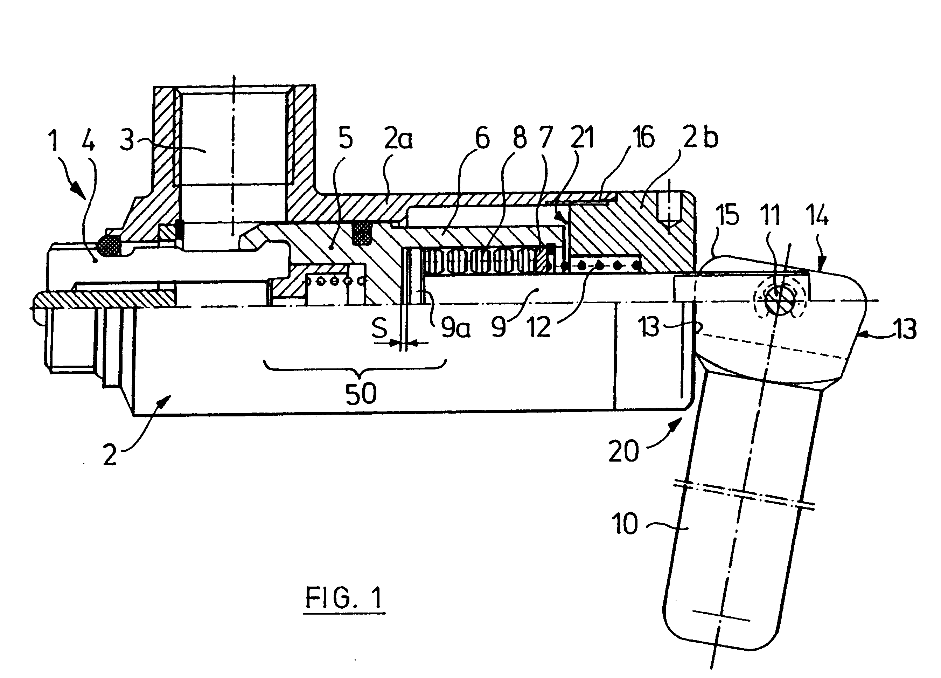

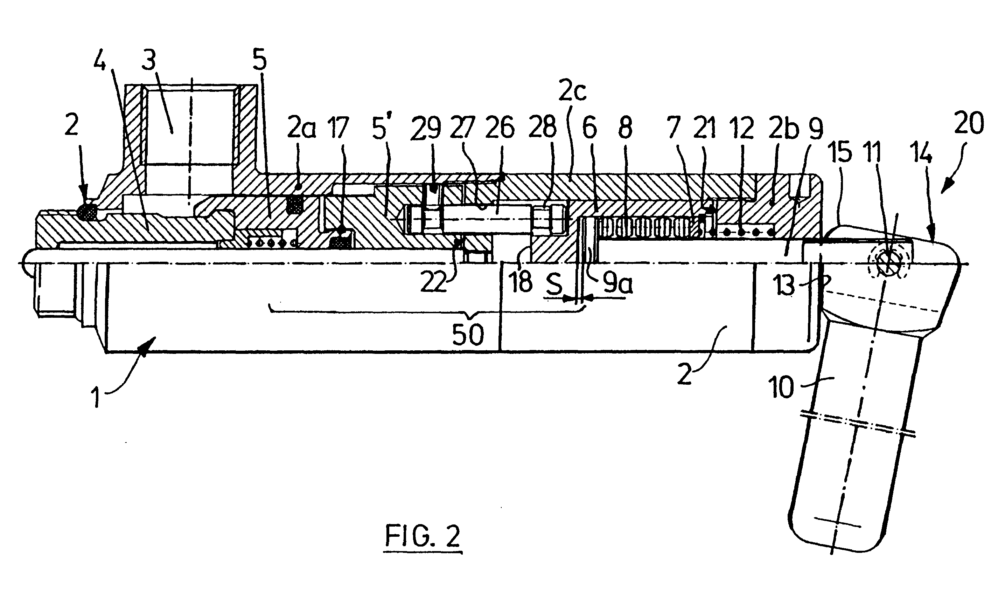

In Fig. 1 ist eine erste Ausführungsform einer Steckkupplung 1 mit einer integrierten Spannvorrichtung gezeigt, die hier im wesentlichen aus einem zylinderförmigen Gehäuse 2 und darin axial beweglichen Spannzangen 4 mit einem ebenso axial verschiebbar gelagerten Spannkolben 5 als Spannelement 50 gebildet ist. Die Spannzangen 4 weisen einen an sich bekannten Aufbau auf und sind an der vorderen Stirnseite der Steckkupplung (hier nach links weisend) um den Umfang des Spannkolbens herum verteilt angeordnet. Beispielsweise sind sechs dieser segmentartigen Spannzangen 4 vorgesehen, so daß in den Zwischenbereichen Gas oder eine Flüssigkeit hindurchfließen kann. Das Fluid wird hierbei über einen seitlichen Anschluß 3 in dem Gehäuse 2 zugeleitet. Die Spannzangen 4 werden mit ihrem hier nach links weisenden, freien Ende an ein nicht näher dargestelltes Anschlußgegenstück, z. B. einen Anschlußnippel oder eine Rohrleitung angeschlossen. Das hier rechte Ende der Spannzangen 4 ist in dem axial verschiebbaren Spannkolben 5 gelagert, der gegenüber dem Gehäuse 2, genauer dem vorderen Kupplungsgehäuseteil 2a abgedichtet ist. Der Spannkolben 5 weist zum rechten Zeichnungsrand hin eine rohrartige Verlängerung auf, die hier als Hülse 6 bezeichnet ist und Bestandteil des Spannelementes 50 ist. Diese Hülse 6 ist hierbei einstückig mit dem Spannkolben 5 ausgebildet, kann jedoch auch getrennt von dem Spannkolben 5 in dem Gehäuse 2 verschiebbar angeordnet sein, wie dies in Fig. 2 dargestellt ist.

Im Inneren der Hülse 6 ist eine relativ stark ausgelegte Druckfeder 8 in Form einer Schraubenfeder oder eines Tellerfederpaketes angeordnet. Das hier rechte Ende der Druckfeder 8 stützt sich gegen einen Anschlagring 7 ab, der mit einem Sprengring in der Hülse 6 fixiert ist. Das hier linke Ende der Druckfeder 8 stützt sich gegen einen Anschlagflansch 9a eines zentral angeordneten Zugbolzens 9 ab. Der Anschlagflansch 9a dient hierbei zugleich der Führung des Zugbolzens 9 in der Hülse 6 und zugleich der Begrenzung des Federweges der Druckfeder 8, da der Anschlagflansch 9a in der hier dargestellten Spannstellung mit einem geringen Spaltmaß S der inneren Stirnfläche der Hülse 6 gegenüberliegt.

Der zentral angeordnete Zugbolzen 9 ist an dem rückseitigen Ende des Gehäuses 2 durch ein Gehäuseteil 2b geführt. An dem hervorstehenden Ende des Zugbolzens 9 ist mittels einer Schwenkachse 11 ein Handhebel 10 gelagert, der eine sehr große Länge aufweisen kann und Bestandteil eines Betätigungsteils 20 für das Spannelement 50 ist. Im Bereich der Schwenkachse 11 ist der Handhebel 10 gegabelt, so daß hierdurch eine stabile, zweiseitige Lagerung erreicht wird. Im Bereich der Schwenkachse 11 sind am Handhebel 10 zwei exzentrisch angeordnete Anschlagflächen 13 und 14 ausgebildet. Die Anschlagfläche 13 liegt in der hier gezeigten Spannstellung an der hinteren Stirnseite des Gehäuses 2 an und ist um den Betätigungshub des Spannelementes 50 von der Schwenkachse 11 beabstandet, während die näher zur Schwenkachse verlaufende Anschlagfläche 14 in der entspannten Stellung dort anliegt. Die Anschlagflächen 13 und 14 sind hierbei unter einem Winkel von ca. 80° zueinander verlaufend ausgebildet, so daß sich eine jeweilige Fixierung oder "Übertotpunkt"-Verriegelung des Handhebels 10 in beiden Stellungen ergibt. In der hier eingezeichneten Spannstellung des Handhebels 10 sind die Spannzangen 4 aufgespreizt und befinden sich in Eingriffslage. Beim Entspannen durch Umlegen bzw. Verschwenken des Handhebels 10 um etwa 100° gelangt somit die zweite Anschlagfläche 14, die senkrecht zur Mittelachse des Handhebels 10 ausgerichtet ist, in Anschlag mit der rückseitigen Stirnfläche des Gehäuses 2.

Bei dieser gestreckten Lage des Handhebels 10 in Fortsetzung des im wesentlichen zylindrischen Gehäuses 2 kann sich der Zugbolzen 9 hier nach links bewegen, wobei der Anschlagflansch 9a unter Beseitigung des Spaltes S in Berührung zur inneren Stirnfläche der Hülse 6 bzw. des Spannkolbens 5 des Spannelementes 50 gelangt. Dadurch ist das Spannelement 50 unter der zusätzlichen Beaufschlagung einer Zusatzdruckfeder 12, die entgegensetzt der Haupt-Druckfeder 8 angeordnet ist, als ein Block oder eine Einheit axial in die Nicht-Spannstellung, hier nach links verschiebbar.

Die Zusatzdruckfeder 12 ist hierbei im rückseitigen Gehäuseteil 2b gelagert, das über ein Verbindungsgewinde 16 mit dem vorderen Gehäuseteil 2a verbunden ist. Die dem Handhebel 10 gegenüberliegende rückseitige Stirnfläche des Gehäuseteils 2b ist bevorzugt gehärtet, nitriert oder vergütet, um hier beim Betätigen des Handhebels 10 Verschleißerscheinungen auszuschließen, insbesondere beim Übergang des abgerundeten Bereiches 15 zwischen den beiden Anschlagsflächen 13 und 14. Es sei jedoch darauf hingewiesen, daß in dem Übergangsbereich 15 zwischen den Anschlagflächen 13 und 14 zur Reibungsverminderung auch jeweils eine Rolle auf den beiden Gabelstücken des Handhebels 10 vorgesehen sein kann, so daß sich hierdurch ein leichtgängiges Verschwenken erreichen läßt.

In Fig. 2 ist eine zweite Ausführungsform der Spannvorrichtung bei einer Steckkupplung 1 in Seitenansicht mit Halbschnitt entlang der Mittelachse dargestellt. Die hierbei funktionell gleichen Bauteile sind mit gleichem Bezugszeichen wie in Fig. 1 bezeichnet. Als wesentliche Unterscheidungsmerkmale gegenüber der ersten Ausführungsform ist hierbei ein relativ kurzer Spannkolben 5 vorhanden, der mit einem Zwischenkolben 5' durch eine Schraubverbindung 17 verbunden ist. Weiterhin ist zwischen den vorderen Gehäuseteil 2a und dem rückseitigen Gehäuseteil 2b ein mittleres Kupplungsgehäuseteil 2c eingefügt. Die Druckfeder 8 ist hierbei von einer vom Spannkolben 5 gesonderten Hülse 6 umgeben. An der Stirnseite 18 der Hülse 6 ist weiterhin ein Zugstift 26 eingehängt und verläuft durch eine Führungsbohrung 27 in dem mittleren Gehäuseteil 2c zu einer entsprechend ausgebildeten Gegenaufnahme in dem Zwischenkolben 5'. Der Zugstift 26 ist dabei durch entsprechende Ausnehmungen 28 an der Hülse 6 zugfest bezüglich der Mittelachse der Steckkupplung 1 eingesetzt und in dem Zwischenkolben 5' mittels einer Querschraube 29 gesichert.

Die Funktion der Spannvorrichtung, insbesondere des Bedien- oder Betätigungsteils 20 mit dem Handhebel 10, dem Zugbolzen 9 und der Druckfeder 8 zur Beaufschlagung des Spannelementes 50 mit der Spannkolben 5 - Spannzangen 4 - Anordnung ist hierbei im wesentlichen gleich wie bei der Ausführungsform nach Fig. 1. Sowohl in Fig. 1 als auch bei der in Fig. 2 gezeigten Eingriffstellung der Spannzangen 4, werden diese über den Spannkolben 5, gegebenenfalls über den Zwischenkolben 5' und den Zugstift 26, sowie über die Hülse 6 mittels der Druckfeder 8 zum rechten Ende hin vorgespannt, so daß die Spannzangen 4 in ihrer Eingriffslage mit hoher Spannkraft fixiert werden. In dieser Spannstellung des Spannelementes 50 ist der Anschlagflansch 9a des Zugbolzens 9 um das Spaltmaß S von der inneren Stirnfläche der Hülse 6 beabstandet und bildet zugleich das linksseitige Abstützlager für die Druckfeder 8. Diese kann somit die Hülse 6 und daran angeschlossene Bauteile des Spannelementes 50 mit hoher Spannkraft nach rechts drücken, bis die Hülse 6 mit ihrer rechten Stirnfläche an einem Anschlag 21 anliegt und/oder am Anschlagflansch 9a und /oder an einem entsprechend wirkenden Anschlag 22 für den Zwischenkolben 5' im Bereich des Zugstiftes 26. Der effektive Federweg der Druckfeder 8 ist somit sehr gering, nämlich entsprechend dem Spaltmaß S lediglich im Millimeterbereich, so daß ein Absinken der Federvorspannkraft der Druckfeder 8 wegen eines zu großen Federweges trotz großen Axialhubes nicht zu befürchten ist.

Aufgrund der Anordnung des Handhebels 10 mit dem zentralen Zugbolzen 9 ergibt sich dabei eine leichte Bedienbarkeit, da der Zugbolzen 9 zusammen mit dem Anschlagflansch 9a Verkantungen bezüglich der Druckfeder 8 ausschließt und zudem die Hebellänge des Handhebels 10 beliebig groß gewählt werden kann. Die Bedienkraft der Spannvorrichtung ist somit bei hoher Spannkraft auf das Spannelement 50 und daran angeschlossener Bauteile, wie hier die Spannzangen 4 sehr gering, da beim Betätigen der Spannvorrichtung über den Großteil des Betätigunghubes mit Axialverschiebung des Spannelementes 50 nur die Federkraft der relativ schwachen Zusatzdruckfeder 12 überwunden werden braucht. Andererseits wird jedoch zum Ende des Betätigungshubes hin in der hier gezeigten Spannstellung, also beim Übergang der Anlage von der Anlagefläche 14 zur Anlagefläche 13 hin die Druckfeder 8 unter Schaffung des Spaltes S vorgespannt und somit aktiviert, so daß diese dann das gesamte Spannelement 50 mit hoher Spannkraft beaufschlagen kann.

Dadurch ergibt sich zum einen eine hohe Anschlußsicherheit der Steckkupplung 1 und zum anderen eine besonders einfache, kraftsparende Bedienbarkeit der Spannvorrichtung beim An- bzw. Abkuppeln der Steckkupplung 1. Wie bereits angedeutet, eignet sich diese Spannvorrichtung nicht nur für Steckkupplungen, sondern auch für andere Anschluß- oder Montagevorrichtungen. Dabei kann auch die hier jeweils links dargestellte Bauteilhälfte schnell ausgetauscht werden, beispielsweise durch Lösen an den Gewindeverbindungen 16, 17 und 19, so daß verschiedenartige Spannzangen oder Spannbacken an das Spannelement 50 und das Betätigungsteil 20 angeschlossen werden können. Hierzu eignet sich insbesondere auch der Zugstift 26, der eine besondere rasche Ankoppelung der Spannvorrichtung an verschiedene Anschluß- oder Vorsatzmodule erlaubt.

## Patentansprüche

1. Spannvorrichtung, insbesondere für eine Steckkupplung, mit einem im wesentlichen zylinderförmigen Gehäuse (2), einem darin axial verschiebbar gelagerten Spannelement (50) und einem an der Rückseite des Gehäuses (2) angeordneten Betätigungsteil (20), das mit dem Spannelement (50) zur Axialverschiebung gekoppelt und von einer Druckfeder (8) beaufschlagt ist, sowie mittels eines Handhebels (10) betätigbar ist,
**dadurch gekennzeichnet, daß**
das Betätigungsteil (20) einen zentral an der Rückseite des Gehäuses (2) angeordneten Zugbolzen (9) aufweist, an dessen gehäuseinneren Ende ein radial verbreiteter Anschlagflansch (9a) zur Abstützung der Druckfeder (8) vorgesehen ist und an dessen gehäuseäußeren Ende der Handhebel (10) schwenkbar gelagert ist.

2. Spannvorrichtung nach Anspruch 1,
**dadurch gekennzeichnet, daß**
der Handhebel (10) als Übertotpunkt-Verriegelungsvorrichtung ausgebildet ist.

3. Spannvorrichtung nach Anspruch 1 oder 2,
**dadurch gekennzeichnet, daß**
der Druckfeder (8) eine entgegengesetztwirkende Zusatzdruckfeder (12) gegenüberliegt.

4. Spannvorrichtung nach Anspruch 3,
**dadurch gekennzeichnet, daß**
die Druckfeder (8) und die Zusatzdruckfeder (12) an einem gemeinsamen Anschlagring (7) am Spannelement (50) abgestützt sind.

5. Spannvorrichtung nach einem der Ansprüche 1 bis 4,
**dadurch gekennzeichnet, daß**
die Druckfeder (8) und der Zugbolzen (9) in einer Hülse (6) des Spannelementes (50) eingesetzt sind.

6. Spannvorrichtung nach Anspruch 5,
**dadurch gekennzeichnet, daß**
der Anschlagflansch (9a) in der Hülse (6) geführt ist.

7. Spannvorrichtung nach Anspruch 5 oder 6,
**dadurch gekennzeichnet, daß**
an der Stirnseite der Hülse (6) wenigstens ein Zugstift (26) zur lösbaren Verbindung mit einem Spannkolben (5) und/oder einem Zwischenkolben (5') angeordnet ist.

8. Spannvorrichtung nach Anspruch 7,
**dadurch gekennzeichnet, daß**
der Zugstift (26) in einer Bohrung (27) eines mittleren Kupplungsgehäuseteils (2c) geführt ist.

9. Spannvorrichtung nach Anspruch 8,
**dadurch gekennzeichnet, daß**
das Gehäuse (2) im Bereich des Zugstiftes (26) geteilt ist.

10. Spannvorrichtung nach Anspruch 8 oder 9,
**dadurch gekennzeichnet, daß**
das Kupplungsgehäuseteil (2c) in das Gehäuse (2) einschraubbar ist.

11. Spannvorrichtung nach einem der Ansprüche 1 bis 10,
**dadurch gekennzeichnet, daß**
das Spannelement (50) einen Spannkolben (5) mit in Axialrichtung einstückig angeformter Hülse (6) aufweist.

12. Spannvorrichtung nach einem der Ansprüche 1 bis 11,
**dadurch gekennzeichnet, daß**
die Druckfeder (8) als Schraubenfeder oder Tellerfederpaket ausgebildet ist.

## Claims

1. A clamping device, especially for a male coupling, with a substantially cylindrical housing (2), a clamping member (50) mounted to be axially displaceable therein and an actuating part (20) which is arranged on the rear of the housing (2) and is coupled to the clamping member (50) for axial displacement and is biased by a compression spring (8) and can be actuated by means of a hand lever (10),
**characterized in that**
the actuating part (20) has a central tension bolt (9) arranged on the rear of the housing (2), with a radially expanded stop flange (9a) for supporting the compression spring (8) provided on its end inside the housing and with the hand lever (10) pivotally mounted on its end outside the housing.

2. A clamping device according to claim 1, **characterized in that** the hand lever (10) is in the form of a locking device operating over dead-centre.

3. A clamping device according to claim 1 or 2, **characterized in that** an auxiliary compression spring (12) acting in the opposite sense is opposed to the compression spring (8).

4. A clamping device according to claim 3, **characterized in that** the compression spring (8) and the auxiliary compression spring (12) abut a common stop ring (7) on the clamping member (50).

5. A clamping device according to any of claims 1 to 4, **characterized in that** the compression spring (8) and the tension bolt (9) are fitted in a sleeve (6) of the clamping member (50).

6. A clamping device according to claim 5, **characterized in that** the stop flange (9a) is guided in the sleeve (6).

7. A clamping device according to claim 5 or 6, **characterized in that** at least one pull pin (26) for releasable connection to a clamping piston (5) and/or an intermediate piston (5') is arranged on the front of the sleeve (6).

8. A clamping device according to claim 7, **characterized in that** the pull pin (26) is guided in a bore (27) of a middle coupling housing part (2c).

9. A clamping device according to claim 8, **characterized in that** the housing (2) is divided in the region of the pull pin (26).

10. A clamping device according to claim 8 or 9, **characterized in that** the coupling housing part (2c) can be screwed into the housing (2).

11. A clamping device according to any of claims 1 to 10, **characterized in that** the clamping member (5) comprises a clamping piston (5) with sleeve (6) formed thereon in the axial direction in one piece.

12. A clamping device according to any of claims 1 to 11, **characterized in that** the compression spring (8) is in the form of a helical spring or a stack of Belleville springs.

## Revendications

1. Dispositif de serrage, notamment pour un accouplement par emboîtement, comprenant un boîtier (2) essentiellement cylindrique, un élément de serrage (50) qui y est monté de façon à pouvoir coulisser axialement et un élément d'actionnement (20) placé sur l'arrière du boîtier (2), qui est accouplé à l'élément de serrage (50) pour le déplacer axialement, qui est sollicité par un ressort de pression (8) et qui peut être actionné au moyen d'un levier à main (10), **caractérisé en ce que** l'élément d'actionnement (20) présente un boulon d'assemblage (9) situé au milieu de la face arrière du boîtier (2), sur l'extrémité intérieure duquel est prévu une bride de butée élargie radialement (9a) servant de support au ressort de pression (8) et sur l'extrémité extérieure duquel le levier à main (10) est monté de façon pivotante.

2. Dispositif de serrage selon la revendication 1, **caractérisé en ce que** le levier à main (10) est réalisé en tant que dispositif de verrouillage au-delà du point mort.

3. Dispositif de serrage selon la revendication 1 ou 2, **caractérisé en ce qu'**au ressort de pression (8) est opposé un ressort de pression supplémentaire (12) antagoniste.

4. Dispositif de serrage selon la revendication 3, **caractérisé en ce que** le ressort de pression (8) et le ressort de pression supplémentaire (12) prennent appui sur une bague de butée commune (7) de l'élément de serrage (50).

5. Dispositif de serrage selon l'une des revendications 1 à 4, **caractérisé en ce que** le ressort de pression (8) et le boulon d'assemblage (9) sont logés dans une douille (6) de l'élément de serrage (50).

6. Dispositif de serrage selon la revendication 5, **caractérisé en ce que** la bride de butée (9a) est guidée dans la douille (6).

7. Dispositif de serrage selon la revendication 5 ou 6, **caractérisé en ce que** sur la face frontale de la douille (6) est placée au moins un goujon d'assemblage (26) pour la relier de façon amovible à un piston de serrage (5) et/ou à un piston intermédiaire (5').

8. Dispositif de serrage selon la revendication 7, **caractérisé en ce que** le goujon d'assemblage (26) est guidé dans un perçage (27) d'une partie de boîtier centrale (2a) de l'accouplement.

9. Dispositif de serrage selon la revendication 8, **caractérisé en ce que** le boîtier (2) est divisé dans la zone du goujon d'assemblage (26).

10. Dispositif de serrage selon la revendication 8 ou 9, **caractérisé en ce que** la partie de boîtier (2c) de l'accouplement peut être vissée dans le boîtier (2).

11. Dispositif de serrage selon l'une des revendications 1 à 10, **caractérisé en ce que** l'élément de serrage (50) présente un piston de serrage (5) comportant une douille (6) qui le prolonge d'un seul tenant dans la direction axiale.

12. Dispositif de serrage selon l'une des revendication 1 à 11, **caractérisé en ce que** le ressort de pression (8) est réalisé en tant que ressort hélicoïdal ou ressort à disques.
